# EUROPÄISCHE PATENTSCHRIFT

(11) **EP 2 030 524 B1**
(45) Veröffentlichungstag und Bekanntmachung des Hinweises auf die Patenterteilung: **20.10.2010**
(21) Anmeldenummer: 07017046.9
(22) Anmeldetag: 31.08.2007
(51) Int. Cl.: A45D 40/26, A46B 9/02, B29C 45/16

(54) **Abstreifer einer Kosmetikeinheit**
Cosmetic unit wiper
Essoreur d'une unité cosmétique

(43) Veröffentlichungstag der Anmeldung: 04.03.2009
(73) Patentinhaber: GEKA GmbH, 91572 Bechhofen (DE)
(72) Erfinder: Schwab, Friedrich, 91623 Sachsen (DE); Wolfsgruber, Dieter, 91595 Burgoberbach (DE)
(74) Vertreter: nospat Patent- und Rechtsanwälte Naefe Oberdorfer Schmidt

(56) Entgegenhaltungen:
- EP-A- 1 752 063
- WO-A-00/54623
- WO-A-2006/013408
- WO-A-2006/059046
- GB-A- 2 061 709
- US-A- 3 752 351

## Beschreibung

Die Erfindung richtet sich auf einen Abstreifer für einen Applikator einer Kosmetikeinheit mit einem Behälter, bestehend aus zwei unterschiedlichen Kunststoffkomponenten. Applikatoren können neben Bürstchen auch solche für Lippen- und Augenkosmetik sein.

Es ist z. B. aus EP 1 161 159 B1 bekannt, Kosmetikeinheiten aus Kunststoff durch Spritzgießen herzustellen. Bei diesen im sogenannten Zwei-Komponenten-Spritzgießverfahren hergestellten Bürstchen wird aus einem relativ harten Kunststoff ein stabiler Kern gespritzt und aus einem relativ weichen Kunststoff wird über diesen Kern ein Borstenkörper gespritzt. Um den Borstenkörper relativ zu dem harten Kern axial zu fixieren, ist es beispielsweise bekannt, am Kern Hinterschneidungen vorzusehen oder endseitig Fixierungskappen oder dergleichen aufzusetzen.

Charakteristisch für diese bekannten Produkte ist, dass die Geometrie des ersten Materials nur teilweise bzw. abschnittsweise von dem zweiten oder auch dritten Material umhüllt wird und je nach Anzahl der unterschiedlichen Materialien zwei oder drei Anspritzpunkte an unterschiedlichen Stellen vorgesehen sind. Üblicherweise hängt dabei die Anzahl der Formkavitäten von der Anzahl der Materialien und von den mit den unterschiedlichen Materialien abzuformenden Geometrien ab. Wird beispielsweise ein 8-fach-Werkzeug für einen 2-Komponenten-Lippenapplikator ausgelegt, sind acht Formkavitäten für die erste Materialkomponente und -geometrie und acht weitere Kavitäten für die zweite Materialkomponente und -geometrie erforderlich.

Hierdurch sind verschiedene Nachteile hinsichtlich der fertigen Produkte bedingt, wie z. B. mehr als ein Anspritzpunkt sowie Abdrücke von Werkzeugtrennungen und -auswerfergeometrien, die sich nachteilig für die Applikationsfunktion und/oder unter visuellen Gesichtspunkten auswirken.

In der WO 2006/013 408 A1 wird ein Abstreifer für einen Applikator, insbesondere ein Bürstchen, einer Kosmetikeinheit beschrieben, wobei der Dichtbereich, an dem der Applikator in den Hals eines Behälters eingesetzt ist, und die Abstreiflippen aus einer weichen zweiten Kunststoff-Komponente bestehen.

Hiervon ausgehend liegt der Erfindung die Aufgabe zugrunde, einen Abstreifer im Zwei-Komponenten-Spritzgießverfahren herzustellen und so auszugestalten, dass über die herkömmlicherweise bei einem solchen Verfahren aus den unterschiedlichen Materialeigenschaften der beiden Komponenten resultierenden Gegebenheiten zusätzliche Vorteile erreicht werden.

Diese Aufgabe wird erfindungsgemäß dadurch gelöst, dass der Abstreifer von der zweiten äußeren Komponente im wesentlichen vollständig umgeben ist, und ein Dichtbereich, wo der Applikator in den Hals des Behälters eingesetzt ist, und die Abstreiflippen aus der zweiten, weicheren Komponente bestehen.

Wenn im Vorstehenden von "im wesentlichen" vollständig umgeben die Rede ist, bedeutet dies vor allem, dass im Bereich eines Anspritzpunktes die innere Material-Komponente möglicherweise geringfügig von außen zugänglich ist, wenn nicht, wie nachstehend beschrieben von einer gezielten Abdeckung in einem weiteren Verfahrensschritt Gebrauch gemacht wird.

Soweit hier und im Folgenden von zwei Material-Komponenten die Rede ist, muss dies so verstanden werden, dass wenigstens zwei Komponenten verarbeitet werden, dass aber natürlich beispielsweise auch noch eine dritte oder noch weitere Komponenten eingesetzt werden können.

Vorzugsweise erfolgt die Herstellung eines derartigen Teils durch ein spezielles Spritzgießverfahren, das die genauen Einspritzzeiten der Material-Komponenten durch ein und denselben Ausschnitt im Werkzeug wechselweise präzise steuert, insbesondere die Dosiermenge, Einspritzzeit und Einspritzdauer.

Bei einem solchen Sandwich-Spritzgießen wird in eine äußere Komponente ein Kern eingebracht. Die Prozessführung verläuft hierzu in zwei bzw. drei Stufen. Zunächst wird die Kavität mit dem Material der Außenhaut teilgefüllt und anschließend die Kernkomponente durch die plastische Seele des eingebrachten Materials nachgespritzt. Zum Abschluss kann mit der ersten Komponente ein Verschluss im Angußbereich erzeugt werden. So wird verhindert, dass das Kernmaterial an der Oberfläche bleibt und gleichzeitig wird das Angußsystem für den nächsten Schuss gereinigt.

Bei einem erfindungsgemäßen Abstreifer für den Applikator einer Kosmetikeinheit mit einem Behälter, z. B. einer Mascara-Einheit, ist mit Vorteil vorgesehen, dass eine weiche äußere Komponente im Dichtbereich zur Erhöhung der Dichtwirkung beim Einsetzen ein Behälter vorgesehen ist. So kann die Dichtscheibe eine Dicke zwischen 0,6 mm und 3,0 mm aufweisen. Damit wird es möglich, die Flasche ohne Sicherheitsspalt auslaufdicht mit dem entsprechenden Verschluss zu verschließen.

Zusätzlich werden durch die zweite weichere Komponente die Abstreiflippen ausgebildet.

Eine weiche, äußere Komponente ist aufgrund von deren Nachgiebigkeit von Vorteil, da dann mit einem größeren Übermaß gearbeitet werden kann, was insbesondere insoweit vorteilhaft ist, wenn es gilt, zwei Bauteile ineinander zu verrasten. Darüber hinaus wird hierdurch eine Montagevereinfachung erzielt.

Die äußere Material-Komponente kann auch so gewählt werden, dass eine anschließende Dekoration, z. B. in Form einer Heißfolienprägung oder mittels Siebdruck und eine eventuelle Beschichtung unterstützt wird, z. B. durch Verwendung von transparentem ABS.

Nachfolgend wird die Erfindung anhand eines bevorzugten Ausfiihrungsbeispiels anhand der Teile einer Mascara-Einheit in Verbindung mit der Zeichnung näher erläutert. Dabei zeigen:
- Fig. 1: einen Längsschnitt durch eine erste Ausführungsform eines nicht erfindungsgemäßen Bürstchens,
- Fig. 2: eine vergrößerte Darstellung des in Fig. 1 eingezeichneten Aus- schnitts C,
- Fig. 3: eine zweite Ausführungsform eines nicht erfindungsgemäßen Bürst- chens,
- Fig. 4: eine teilweise aufgeschnittene Seitenansicht eines nicht erfindungs- gemäßen Behälters einer Kosmetikeinheit,
- Fig. 5: einen Längsschnitt durch eine erfindungsgemäße Abstreifeinrich- tung einer Kosmetikeinheit und
- Fig. 6: einen Längsschnitt durch die Stiel- und Gewindeeinheit einer nicht erfindungsgemäßen Kosmetikeinheit.

Die in der Zeichnung dargestellten Teile einer Kosmetikeinheit, insbesondere einer Mascara-Einheit, können sämtliche wie nachfolgend beschrieben im Zwei-Komponenten-Sandwich-Verfahren hergestellt sein oder auch nur einzelne Teile hiervon. Besondere Bedeutung kommt dabei dem Bürstchen zu.

Bei einer fertigen Einheit ist ein Bürstchen 1 an einem Stiel 2 mit einer Schraubkappe 3 mit Innengewinde 4 befestigt, welches und auf das Außengewinde 5 eines Behälters 6 aufgeschraubt werden kann, wobei eine Abstreifeinrichtung 7 in den Hals 8 eines Behälters 6 eingesetzt ist.

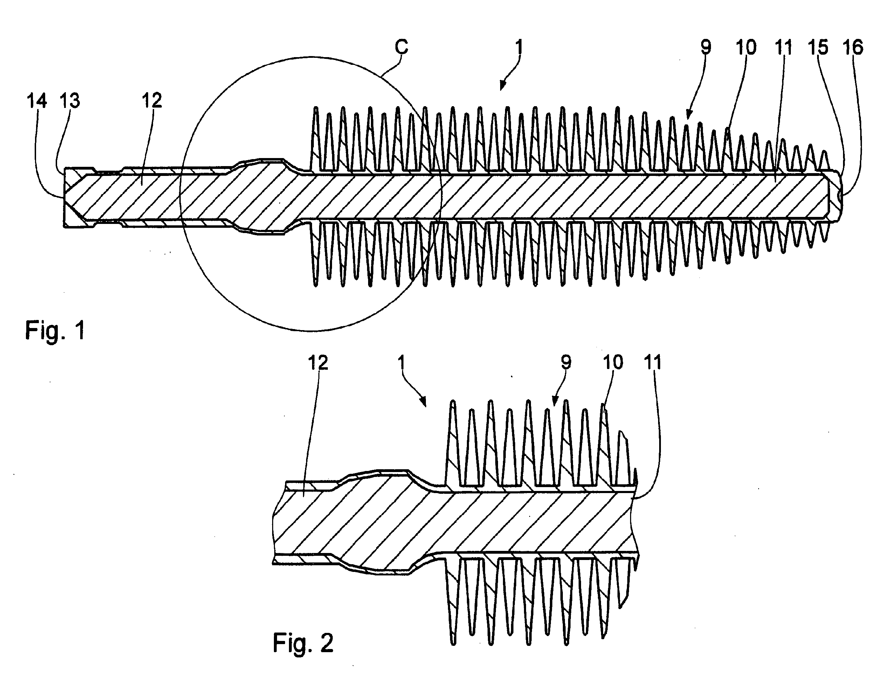

Bei der in Fig. 1 dargestellten Ausführungsform eines nicht erfindungsgemäßen Bürstchens 1 wird der Borstenbesatz 9 durch eine Mehrzahl von Borsten 10 gebildet und besteht aus einer weicheren Kunststoff-Komponente, die einen Kern 11 aus einer härteren Kunststoff-Komponente umschließt. Der Kern 11 weist einstückig mit diesem im Bereich jenseits des Besatzes 9 einen Stielansatz 12 auf, wobei an einer in der Zeichnung linken Stirnseite 13 des Kerns 11 bzw. des Stielansatzes 12 ein Anspritzpunkt 14 vorgesehen ist.

An der anderen Stirnseite 15 greift bei 16 ein Auswerfer an, um das fertig gespritzte Bürstchen 1 aus der Form auszuwerfen.

Wie insbesondere aus Fig. 2 deutlich wird, weisen die Borsten 10 zum freien Ende hin eine konische Verjüngung auf.

Aus Fig. 1 wird deutlich, dass die weichere, äußere Kunststoff-Komponente, aus der auch die Borsten 10 bestehen, den Kern 11 und den Stielansatz 12 mit Ausnahme einer kleinen Lücke beim Anspritzpunkt 14 im wesentlichen vollständig umgibt.

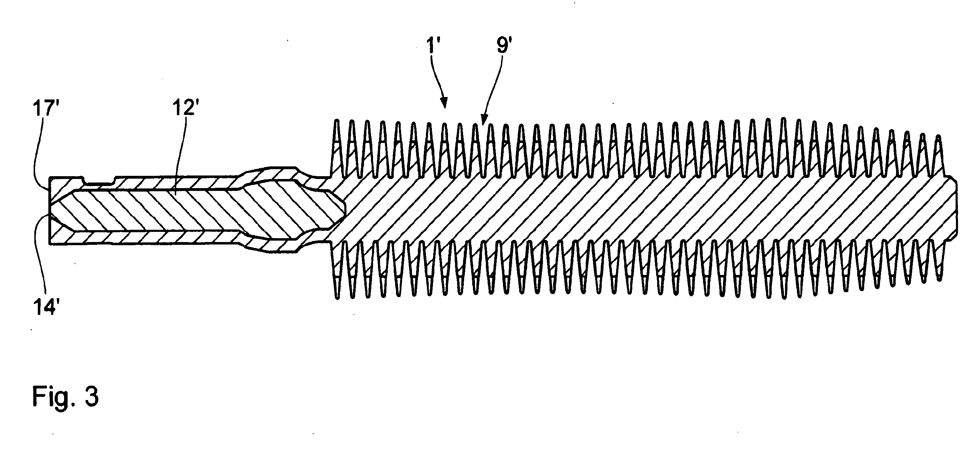

In Fig. 3 ist ein nicht erfindungsgemäßes Bürstchen 1' dargestellt, welches sich von dem Bürstchen 1 nach Fig. 1 dadurch unterscheidet, dass der Kernbereich des Besatzes 9' aus dem gleichen Material besteht wie der Besatz und lediglich der Stielansatz 12' aus einer härteren Kunststoff-Komponente gespritzt ist, die mit Ausnahme des Anspritzpunktes 14' von der äußeren, weicheren Komponente vollständig umgeben ist.

Der Auswerfer greift im Bereich des Anspritzpunktes 14' an der hinteren Stirnseite 17' des Stielansatzes 12' an.

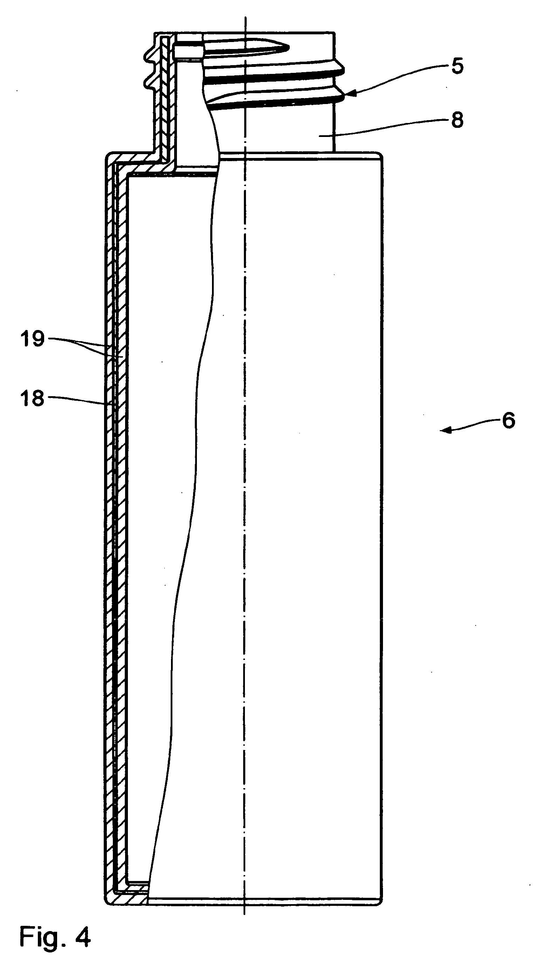

Der in Fig. 4 dargestellte nicht erfindungsgemäße Behälter 6 umfasst zwei Kunststoff-Komponenten, nämlich eine innere tragende Komponente 18, die sowohl innen als auch außen vollständig von einer zweiten Komponente 19 umgeben ist. Im Sinne der Erfindung wäre es denkbar, diese zweite Komponente 19 auch nur vollständig an der Außenseite oder nur vollständig an der Innenseite vorzusehen.

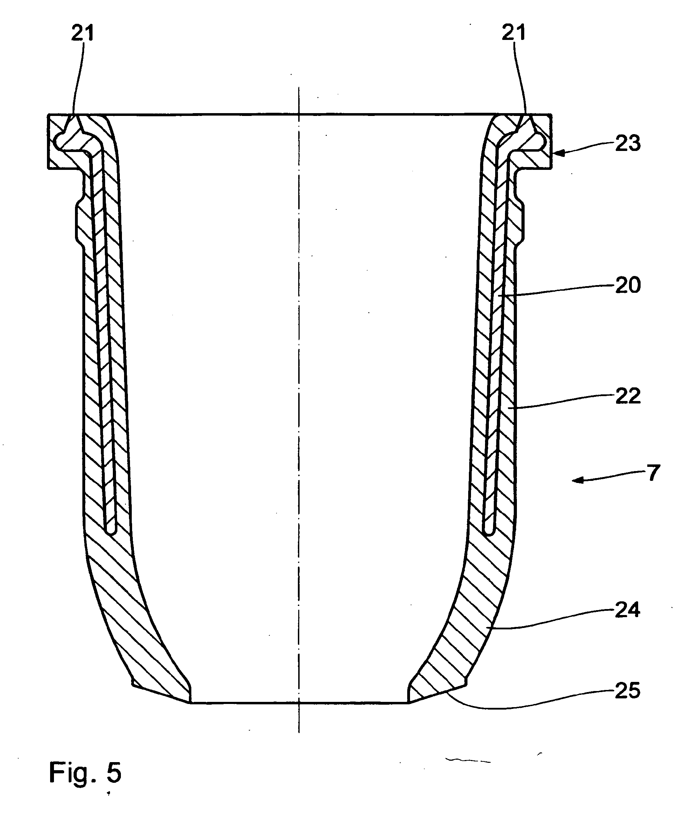

Ein in Fig. 5 dargestellter erfindungsgemäßer Abstreifer 7 weist eine innere, härtere tragende Komponente 20 auf, die bis auf die Anspritzpunkte (bzw. einen Anspritzring) 21 vollkommen von einer weichen Komponente 22 umgeben ist.

Die weichere Komponente 22 ist im Dichtbereich 23 und im Bereich der Abstreiflippen 24 besonders vorteilhaft. Der Auswerfer greift am freien stirnseitigen Ende 25 der Abstreiflippen 24 an.

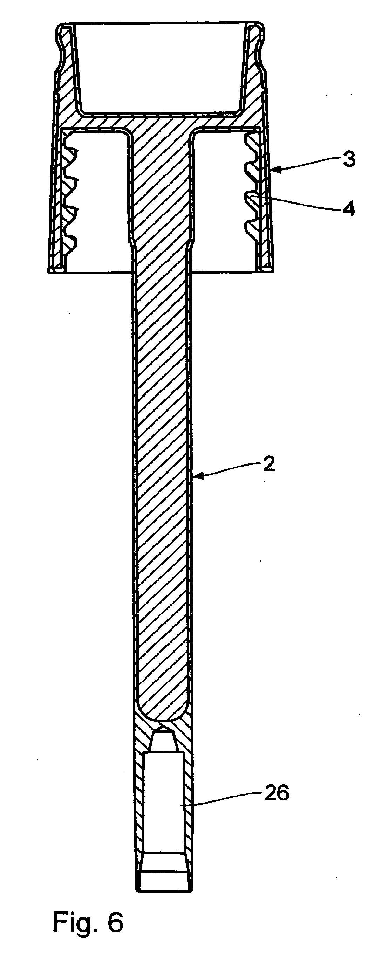

Im Fig. 6 ist eine nicht erfindungsgemäße Anordnung bestehend aus einem Stiel 2 mit einer Ausnehmung 26 zur Befestigung eines Applikators, z. B. eines Bürstchens, dargestellt, an dessen oberen Ende eine Schraubkappe 3 mit einem Innengewinde 4 einstückig angeformt ist.

Das Innere des Stiels 2 und der Schraubkappe 3 wird durch eine erste härtere Kunststoff-Komponente gebildet, die vollständig von einer zweiten weicheren Kunststoff-Komponente umgeben ist, die im Bereich des Innengewindes 4 die Reibung herabsetzt und ein Einrasten des Applikators in die Ausnehmung 26 erleichtert.

Außer den vorstehend konkret in der Zeichnung beschriebenen Ausführungsformen sind noch zahlreiche weitere vorteilhafte Ausführungsformen denkbar.

Beispielsweise ist aus EP 1 348 352 B1 eine sogenannte "Duo-Kosmetikeinheit" bekannt, bei der zwei unterschiedliche Applikatoren beiderseits einer zentralen Hülse angeordnet sind. Auch diese Hülse kann vorteilhaft eine härtere, steifere innere Materialkomponente und eine äußere Materialkomponente umfassen, die eine gewünschte Haptik ermöglicht, die beispielsweise für Kratzfestigkeit sorgen kann, und die optisch transparent, transluzent oder eingefärbt sein kann. Der Anspritzpunkt liegt dabei vorzugsweise im Bereich der Zwischenwand der Hülse in Form eines Punktangusses, eines Ringangusses oder eines Nadelverschlussangusses. Im fertigen Zustand kann die härtere Materialkomponente im Bereich des Anspritzpunktes von der zweiten Komponente vollständig überdeckt sein oder aber auch frei hervortreten. Der Auswerfer greift vorzugsweise an der Stirnseite an.

Darüber hinaus können auch die beiderseits auf die Verbindungshülse aufgesetzten Übersteckkappen, welche die Applikatoren abdecken, ausgestaltet sein wie oben beschrieben. Dabei kann ebenfalls der Anspritzpunkt an der Innenseite des Kappenbodens liegen und die zweite Komponente kann wiederum transparent, transluzent oder eingefärbt sein.

Ein weiteres Beispiel ist ein Bürstchen mit im Querschnitt nicht kreisförmigen Borsten, die sich zur Spitze hin verjüngen. Dabei kann vorgesehen sein, dass sich der Querschnitt zur Spitze hin ändert.

Die beschriebene Technologie kann mit Vorteil auch bei Applikatoren Anwendung finden, die ein Erscheinungsbild haben, als wäre eine Mehrzahl von Scheiben nebeneinander aufgereiht.

Überraschend ist, dass mit der beschriebenen Technologie Teile mit einem individuellen Gewicht von 0,1 bis 10 g hergestellt werden können, wobei trotz dieses niedrigen Teilegewichts das Dosiervolumen zwischen 4 und 80 cm³ liegen kann. Die Gewichtsanteile der einzelnen Komponenten können stark variieren, z. B. in einem Bereich von 5 bis 95 %.

## Patentansprüche

1. Abstreifer für einen Applikator einer Kosmetikeinheit mit einem Behälter (6), insbesondere für ein Bürstchen, bestehend aus zwei unterschiedlichen Kunststoff-Komponenten, wobei ein Dichtbereich, wo der Applikator in den Hals (8) des Behälters (6) eingesetzt ist, und die Abstreiflippen (24) aus der weicheren zweiten Kunststoff-Komponente (22) bestehen, **dadurch gekennzeichnet, dass** eine erste innere Kunststoff-Komponente von einer zweiten äußerten Kunststoff-Komponente im Wesentlichen vollständig umgeben ist.

## Claims

1. Wiper for an applicator of a cosmetics unit with a container (6), in particular for a brush, consisting of two different plastic components, wherein a sealing area, where the applicator is inserted into the neck (8) of the container (6), and the wiper lips (24) are formed from the second softer component (22), **characterized in that** a first inner plastic component is substantially completely enclosed by a second outer plastic component.

## Revendications

1. Dispositif racleur pour un applicateur d'une unité cosmétique comprenant un récipient (6), en particulier pour une petite brosse, constitué de deux composants différents en matière plastique et dans lesquels une zone d'étanchement, où l'applicateur est introduit dans le goulot (8) du récipient (6), et les lèvres de raclage (24) sont constituées avec le second composant en matière plastique (22) plus tendre, **caractérisé en ce qu'**un premier composant en matière plastique intérieur est entouré sensiblement entièrement par un second composant en matière plastique extérieur.
